# EUROPEAN PATENT APPLICATION

(11) **EP 1 484 867 A2**
(43) Date of publication of application: **08.12.2004**
(21) Application number: 04102495.1
(22) Date of filing: 03.06.2004
(51) Int. Cl.: H04L 12/28

(54) **Allocating Channel Time in a Wireless Network**

(30) Priority: 03.06.2003 KR 2003035777
(71) Applicant: Samsung Electronics Co., Ltd., Suwon-si, Gyeonggi-Do 442-742 (KR)
(72) Inventor: An, Cheol-hong, 248-806 Ssangyong APT, Yeongtong-gu, suwon-si Gyeonggi-do (KR)
(74) Representative: Read, Matthew Charles

(57) **Abstract**

An apparatus and method for allocating channel time for each application in a single superframe when applications such as wireless USB and IEEE 802.2, which are implemented in a MAC layer, coexist on a wireless PAN. The apparatus includes a beacon generating module for generating a superframe; a duration adjusting module for adjusting a duration of the superframe to be a multiple of a frame of an upper application layer of a device; a channel time dividing module for comparing an allowable size of maximum CTA in the frame of the upper application layer of the device with a size of isochronous CTA of another device and dividing the CTA, if necessary; and a channel time relocating module for comparing a super-rate of CTA previously located in the superframe with a super-rate of CTA to be newly added and relocating the newly added CTA.

## Description

The present invention relates to an apparatus for managing channel allocation between a plurality of wireless devices within a network, the apparatus being configured to perform a process comprising receiving a request for a channel time allocation, indicative of the period of time that a device requires to communicate data over the network and to a method of managing channel allocation between a plurality of wireless devices within a network, the method comprising receiving a request for a channel time allocation, indicative of the period of time that a device requires to communicate data over the network.

Due to the progress of digital technology, many digital products such as DVD players, cable STBs (SetTop Boxes), DVCRs (Digital Video Cassette Recorders), DTVs (Digital TVs) and PCs (Personal Computers) are all interconnected on a single network. Various protocols can be implemented in such equipment in order to transmit and/or receive audio/visual (AV) data to or from other equipment. When these various protocols are to be transmitted in a wireless PAN (Personal Area Network), a method of sharing a wireless connection is required.

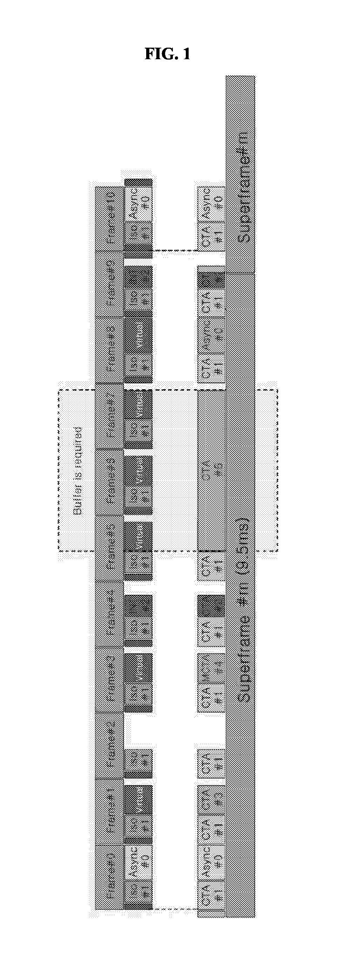

Referring to Figure 1, a known channel time allocation (CTA) structure is divided into two layers. An upper layer and a lower layer, which more generally forms part of a protocol stack. The upper layer shows the time-based structure of continuous frames of an upper application layer, and the lower layer shows the time-based structure of a superframe of a MAC layer used for wireless communication. It is noted that "application" as used in the specification refers to interfaces or standards and "application layer" as used in the specification does not refer to the application layer in the Open Systems Interconnect (OSI) Model. The upper application layer is configured such that data are directly transmitted from the upper application layer to the recipient in one of two ways. In a wired communication system, the data are transmitted without use of the MAC layer. However, in a wireless communication system, the data are transmitted from the upper application layer through the lower MAC layer. In the wireless communication system, the received data are subsequently transferred back to the upper application layer through the lower MAC layer. In other words, the known system shown in Figure 1 can be obtained by combining an upper application layer used in existing wired communication with the MAC layer required in a wireless communication system.

In such a known system, isochronous data should be transmitted every frame for applications having a very short frame period, e.g. a wireless USB device. Further, if a large CTA (CTA #6) is allocated to another device (which is not a wireless USB device), data cannot be transmitted to, for example, the wireless USB devices during this period. This invention seeks to address this problem.

One way of solving this problem would be to buffer the data attributed to the large CTA that should be sent during this period. However, since the amount of data which need buffering is not known, it is impossible to know how much buffer memory is needed for a wireless device. Also, by buffering the data, the efficiency of the network is reduced. This solution is therefore not suitable.

A further problem identified by the applicant is that some data contained within the frames in the upper layer may not be transmitted when it should be. An example of this is shown in Figure 1, wherein some data in Frame#9 may not be transmitted. This problem is addressed in one embodiment of the present invention.

An apparatus, according to the present invention, is characterised by being configured such that said process comprises:
comparing the requested channel time allocation with channel time allocation available during a first frame of data in a first format; and
dividing the requested channel time allocation over a plurality of available channel time allocation slots, available in a second frame of data in a second format, and locating the requested channel time allocation therein.

A method, according to the present invention, is characterised by:
comparing the requested channel time allocation with channel time allocation available during a first frame of data in a first format; and
dividing the requested channel time allocation over a plurality of available channel time allocation slots available in a second frame of data in a second format and locating the requested the channel time allocation therein.

This solves the problem described above by allocating the channel time over a plurality of timeslots. This solution allows data to be transferred over the wireless link by utilising timeslots that are reserved for use by other devices and are not in use at that time. In other words, the invention allows more efficient use of the channel over the network. Moreover, there is no requirement using the present invention of having to provide a buffer. Therefore, there is a further advantage in that memory requirements are less.

There may be further provided means for generating a plurality of frames of data in a first form, each frame being of predetermined duration, and means for generating at least one frame of data in a second form, wherein the frame of data in the second form is of a duration substantially equal to a multiple of the predetermined duration of the frames in the first form.

This is advantageous because this solves the second problem identified hereinbefore. By ensuring that the frame of the second form is coincident with a multiple of the frames of the first form, this ensures that periodic transmission is maintained and data is not lost.

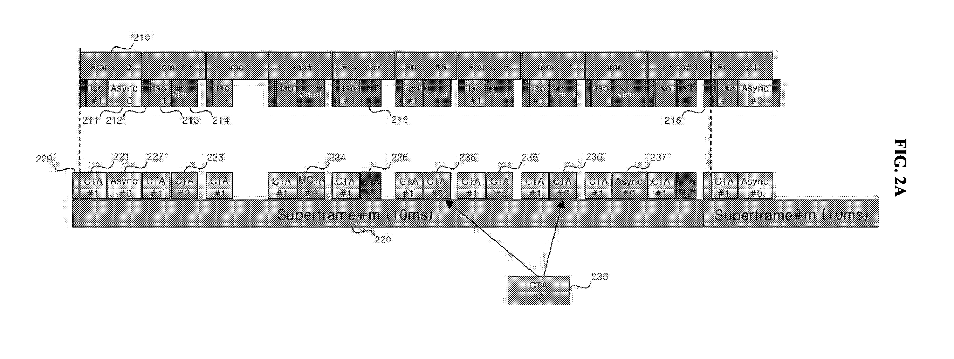

The skilled person will be aware that the present invention can be used to allocate channel time for each application in a single superframe when an application for wireless USB implemented in a MAC layer, an application of IEEE LAN protocol 802.2 specifying an implementation type of a Logical Link Control Sub Layer (LLC sub layer) of a Data-Link Layer, and the like all coexist on a wireless PAN. An embodiment of the present invention will now be described, by way of example only, with reference to Figures 2A to 4 of the accompanying drawings, in which:
Figure 1 shows a structural diagram of known CTA allocation in a superframe generated by a piconet coordinator (PNC);
Figure 2A shows a structural diagram of CTA allocation in a superframe generated by a PNC according to one embodiment the present invention;
Figure 2B shows a structural diagram of a unit frame that a device using an application generates in accordance with an embodiment of the present invention.
Figure 3 shows a diagram of modules forming an apparatus for generating a new superframe according to one embodiment of the present invention; and
Figure 4 is a flowchart illustrating a method for implementing one embodiment of the present invention.

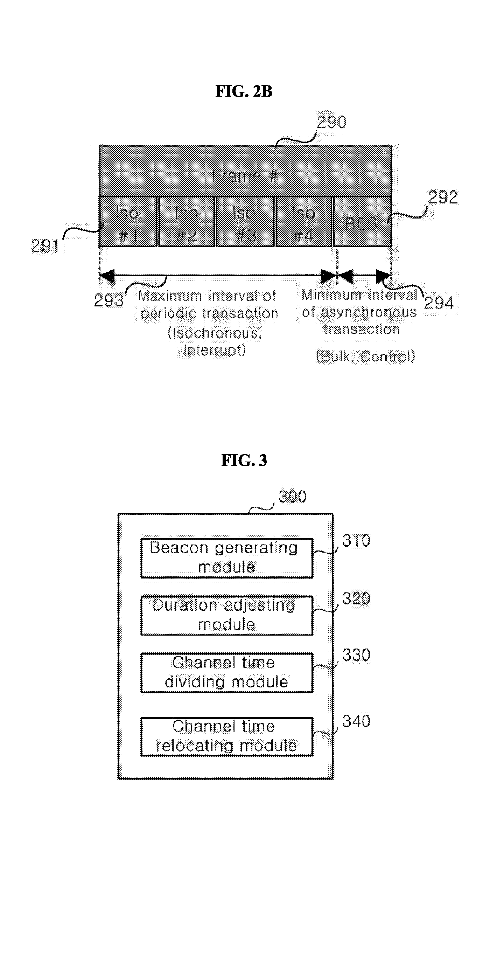

Referring to Figure 2A, the upper layer shows the structure of a frame 210 of a layer in which an application for wireless USB or IEEE 802.2 is present. The lower layer shows the structure of a superframe 220 existing within a MAC layer. The superframe 220 is a time-based structure. In this embodiment, it is assumed that the applications for wireless USB and IEEE 802.2 coexist in a PAN. In a frame for wireless USB, an isochronous channel and interrupt channel are periodically generated. Also, an asynchronous channel also exists. In this embodiment, the duration of a wireless superframe is set to 10ms and the duration of a single USB frame is set to 1ms. As a result, ten frames exist within one superframe. It should be noted that the duration of any single frame may be more or less than 1ms, and also, the duration of a superframe may be different. This may be in accordance with a standard (such as the IEEE 802.2 standard) or may be arbitrarily chosen. Moreover, there may be more or less than 10 frames existing within one superframe. The beginning of the superframe is marked with a beacon 229. Serial numbers of the USB frames in the upper USB layer (indicated as #1, #2 etc.) are numbered consecutively after the beacon signal. A beacon period is deemed to begin at RES of the upper application layer. RES is a non-periodic save area 292 as shown in Figure 2B. CTA #1 221 is set to start at a coincident time with the start of the frame #0 210 in the upper layer.

In the superframe 220, serial numbers such as #1 and #2, numbered in the CTA, represent Stream Indexes that are used to determine which sections of data correspond with which sections of data. Thus, the same Stream Index (e.g. #1 and #2) represent a stream of data that correspond with one another. Consequently, a different Stream Index represents a stream of different data.

A start of frame 212 shown in this figure is a portion for indicating a start of frame for each USB frame 210.

For an isochronous transaction, an isochronous CTA is allocated to the wireless USB device by the PNC. This is achieved by the number of frames of the upper USB application existing in a period of one superframe. In this example, a portion of CTA #1 221 in the lower superframe contains ISO #1 of the upper USB layer. The lower superframe section has a super-rate value of 10.

In the case of an interrupt transaction, the interval of the frame where the interrupt transaction should exist is calculated and allocated from the PNC. In this example, since the interrupt transaction occurs every five frames, two isochronous channel times are allocated by the PNC. INT (which means the interrupt transaction) of the upper layer is shown as an isochronous CTA in the lower layer. However, the INT is shown in every fifth periodic frame interval in the upper layer, whereas it is shown twice per superframe. This is because the INT is not the interrupt transaction but the isochronous CTA of which the super-rate value is 2.

If the source ID of the allocated CTA is not communicating using the same format as the upper layer (in this example, USB), it is processed such that scheduling is generated virtually in the frame. For example, a device for executing the 802.2 application (which is not the wireless USB device) is allocated channel time by the PNC. In other words, a portion of a frame in the upper layer is allocated, noting the existence of the wireless USB device. However, a real transaction does not occur with this device so such a portion of the frame is shown as a Virtual Traffic period 214.

Asynchronous transaction 211 of the upper layer occupies an empty portion in one frame (a portion outside of the isochronous transaction portion) and asynchronous CTA 227 of the lower layer occupies an empty portion of one entire superframe.

Further, reference numerals 233, 234, 235, 236 and 237 represent CTAs of other devices (which are not USB devices). Among them, CTA #6 236 is originally requested as a single CTA but is divided into two separate CTAs in order to avoid the problems described in connection with Figure 1.

Referring now to Figure 2B where the duration of a frame 290 of the application is 1ms (as was illustrated in Figure 2A), if a data transfer rate of 20Mbps is required in a device having a physical layer of 100Mbps, an ISO (Isochronous) slot 291 for performing such data transmission should be 0.2ms. Each frame of the application has a maximum ratio of periodic transactions to non-periodic or asynchronous transactions. Accordingly, when the device is allocated isochronous channel time by the PNC, it must ensure that the channel time does not exceed this maximum ratio. Further, the PNC should not allocate isochronous CTA to the frame. As shown in Figure 2B, the sum of all the ISO slots does not exceed a maximum interval 293 of the periodic transaction. The other portion of the frame, which is not occupied by the ISO slots, remains a RES 292 (non-periodic save area), so that asynchronous transactions can be available in the RES interval.

In Figure 2B, isochronous and interrupt transmissions are periodic transactions, whereas bulk and control transactions are non-periodic (asynchronous) transactions. Firstly, the isochronous transaction is a periodic transaction and corresponds to continuous communication made between a host and a device. Isochronous transactions are generally needed for a case (e.g., video stream, etc.) where data transmission should be made at the almost same speed as that of the original data stream from which the transmission originates. Secondly, the interrupt transaction corresponds to a transaction that is periodic but does not appear every frame but rather at a constant frame interval. In other words, the period of transaction is a number of frames. Thirdly, the control transaction occurs in bursts and is therefore non-periodic. The control transaction uses a request/response type communication that is initiated by the host software. Finally, the bulk transaction is a non-periodic data transmission that utilises all available bandwidths when they are available. If the bandwidths are not available, the bulk transmission is delayed until the bandwidths become available.

Referring now to Figure 3, the apparatus 300 can be operated in a state where it is incorporated into a PNC. The apparatus comprises a beacon generating module 310, a duration adjusting module 320, a channel time dividing module 330, and a channel time relocating module 340.

The beacon generating module 310 generates and transmits the superframe according to the present invention, within a beacon period. A detailed description on the superframe was made hereinbefore in connection with FIGs. 2A and 2B, and therefore will not be explained any further here.

The duration adjusting module 320 adjusts the duration of the superframe so that the duration becomes approximately equal to an integral multiple of the duration of a frame of the upper USB application layer of a device. In other words, the duration of the superframe is wholly divisible by the duration of a single frame in the upper application layer. If the superframe duration is not approximately equal to an integral multiple of a single frame duration, the adjusting module 320 requests that the PNC adjusts the duration of the superframe so that this is achieved. Accordingly, the PNC adjusts the superframe duration and then feeds back the adjusted duration value as a response to the request. In Figure 2A, the duration of the superframe is set to 10ms and the duration of the frame is set to 1ms. As a result, ten upper layer USB frames exist in one superframe.

As described above, if the duration of the superframe is not set to be approximately equal to an integral multiple of the upper layer USB frame, periodic transmission may be hindered. In other words, an incomplete frame may be generated in a portion where the end point of a superframe does not coincide with the end point of any one of the frames. Therefore, data corresponding to the incomplete frame will not be properly transmitted.

The channel time dividing module 330 compares the allowable size of the maximum CTA available from a frame of the upper application layer of the device with the size of the isochronous CTA requested by another device. This other device may be using IEEE 802.2, wireless USB or the like. The channel time dividing module 330divides the CTA, if necessary into a number of parts. More specifically, the channel time dividing module 330 determines whether the CTA that the device requested from the PNC is isochronous or asynchronous. If the CTA is isochronous, the channel time dividing module 330 compares the requested CTA with totally available CTA within the upper layer to determine whether or not the requested CTA is available. If it is determined that the requested CTA is not available, the module sends a response "not available bandwidth" to the requesting device. Otherwise, the module compares the size of the requested CTA with the size of a maximum CTA slot (for example, the size of a single ISO shown in Figure 2B), i.e., the CTA for the maximum data that can be isochronously transmitted in each of the upper layer frames for AV transmission using, for example, wireless USB or wireless 1394. If the value of the requested CTA is greater than that of the maximum CTA, the requested CTA is divided by a value obtained by adding 1 (one) to the quotient of the size of the requested CTA divided by the size of the maximum CTA. This maximum data is then changed into a number of super-rated CTAs which is equal to the divided CTAs.

The channel time relocating module 340 compares the super-rate of a current CTA, and then either relocates the current CTA if the super-rate of the current CTA is greater than that of an existing CTA or relocates the current CTA by merely appending it to the existing CTA if the super-rate of the current CTA is less than that of the existing CTA. In other words, the channel time relocating module 340 adjusts the location of the current CTA depending on the value of the super-rate of the current CTA compared with an existing CTA.

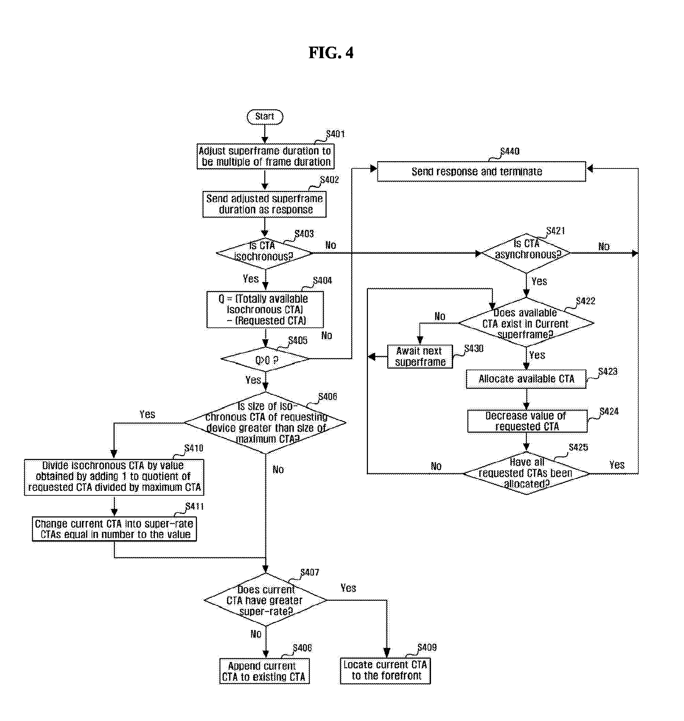

Referring now to Figure 4, based on information of the superframe duration generated from by the PNC, the duration of a superframe in the MAC layer is divided by the duration of a frame of the upper application layer. At this time, the superframe duration should be set to be approximately equal to an integral number of multiples of the frame duration. If the superframe duration is not approximately equal to an integral multiple of the frame duration, a request is sent to the PNC to adjust the superframe duration. Accordingly, the PNC adjusts the superframe duration (S401) and the requested value is returned as a response (S402).

Now, the PNC determines whether the requested CTA is isochronous or asynchronous (S403). If the requested CTA is isochronous, it is compared with the totally available CTA to determine whether adequate CTA is available (S404 and S405). If it is determined that adequate CTA is not available to meet the request, a response "not available bandwidth" is sent to the requesting device (S440). Alternatively, if adequate bandwidth is available, the size of the requested CTA is compared with the size of the maximum CTA (for example, the size of a single ISO shown in Figure 2b), i.e. the CTA for the maximum data that can be isochronously transmitted in each upper layer frame for AV transmission using, for example, wireless USB or wireless 1394 (S406). If the requested CTA is greater than the maximum CTA, a calculation to determine how many times larger the requested CTA is compared to the maximum CTA available. In accordance with this calculation, the requested CTA is changed into a number of isochronous super-rate CTAs. In other words, the size of the isochronous CTA is divided by the value obtained by adding 1 (one) to the quotient of the size of the requested CTA divided by the size of the maximum CTA (S410). Then, the requested CTA is changed into a number of super-rate CTAs which is equal in number to the resulting value (S411) of the calculation. If the requested CTA is less than the maximum CTA, the corresponding isochronous CTA is allocated thereto.

In the case of super-rate allocation, CTA is allocated within the upper layer frame in order of priority. Priority is increased as the value of the super-rate increases. In other words, the super-rate value of a superframe of the CTA is compared (S407), and the CTA with a higher super-rate be located first and the CTA with a lower super-rate be located subsequently in the frame. In the case of wireless USB, the interrupt transaction is always executed after the isochronous transaction has been executed. Therefore, the CTA for isochronous transaction should be located so that it is executed prior to the CTA for the interrupt transaction. Therefore, if the super-rate of the current CTA is greater than that of the existing CTA, the current CTA should be relocated ahead of the existing CTA (S409). If the super-rate of the current CTA is less than that of the existing CTA, the current CTA is relocated by merely appending it to the existing CTA (S408).

In the case of the asynchronous CTA request, it is determined whether an available CTA area exists in the superframe. If it is determined that an available area exists, the asynchronous channel time is allocated to the area (S423), and the requested CTA value is then decreased by the allocated channel time (S424). Further, the allocation is repeated until all the requested CTAs have been allocated (S425). If it is determined that the available area does not exist, the request will be held until the next superframe, wherein the same operation will be performed (S430).

Although the foregoing has been described with the upper layer made up of USB frames and the lower layer being a MAC layer, the present invention is not so limited. The description using these formats is only an example. Other layers are envisaged such as IEEE 802.2 being the upper layer. Moreover, the upper layer could be a user defined layer with frame durations being specified by the user. Additionally, the lower layer could contain superframes generated by the user or be of a different format to those described above.

## Claims

1. An apparatus for managing channel allocation between a plurality of wireless devices within a network, the apparatus being configured to perform a process comprising receiving a request for a channel time allocation (236), indicative of the period of time that a device requires to communicate data over the network, and being **characterised by** being configured such that said process comprises:
comparing the requested channel time allocation (236) with channel time allocation available during a first frame of data (213) in a first format (210); and
dividing the requested channel time allocation (236) over a plurality of available channel time allocation slots, available in a second frame of data (220) in a second format, and locating the requested channel time allocation therein.

2. An apparatus according to claim 1, wherein the requested channel time allocation is divided in response to the requested channel time allocation being greater than any single available channel time allocation slot within the first frame of data (210).

3. An apparatus according to claim 1 or 2, wherein said data to be communicated over the network is isochronous data.

4. An apparatus according to claim 1, 2, or 3 comprising:
means for generating a plurality of frames of data in a first format (210), each frame of data in the first format (210) being of predetermined duration; and
means for generating at least one frame of data in a second format (220), wherein the frame of data in the second format (220) is of a duration substantially equal to an integer multiple of the predetermined duration of the frames in the first format (210).

5. An apparatus according to any one of the preceding claims, wherein, the locating of the requested channel time in a second format is performed in a priority order.

6. A method of managing channel allocation between a plurality of wireless devices within a network, the method comprising receiving a request for a channel time allocation (236), indicative of the period of time that a device requires to communicate data over the network, and being **characterised by:**
comparing the requested channel time allocation (236) with channel time allocation available during a first frame of data in a first format (210); and
dividing the requested channel time allocation over a plurality of available channel time allocation slots available in a second frame of data in a second format (220) and locating the requested the channel time allocation therein.

7. A method according to claim 6, wherein the requested channel time allocation is divided in response to the requested channel time allocation being greater than any single available channel time allocation slot within the first frame of data (210).

8. A method according to claim 6 or 7, wherein said data to be communicated over the network is isochronous data.

9. A method according to claim 6, 7 or 8, including:
generating a plurality of frames of data in a first format (210), each frame of data in the first format (210) being of predetermined duration; and
generating at least one frame of data in a second format (220), wherein the frame of data in the second format (220) is of a duration substantially equal to an integer multiple of the predetermined duration of the frames in the first format (210).

10. A method according to any one of claims 6 to 9, wherein the locating of the requested channel time (236) in a second format is performed in a priority order.

11. A signal representing program codes for controlling a computer, having a wireless networking capability, to perform a method according to any one of claims 6 to 10.

12. A data carrier having a signal according to claim 11 recorded thereon or therein.

13. An apparatus for allocating channel time to an application on a wireless personal area network (PAN), comprising:
a duration adjusting module for adjusting a first duration of a superframe so that the first duration becomes substantially equivalent to a multiple of a second duration of a frame of an upper layer of a device;
a channel time dividing module for comparing an allowable size of a maximum channel time allocation (CTA) in the frame of the upper layer of the device with a size of an isochronous CTA of another device and dividing the isochronous CTA into super-rate CTA, if necessary; and
a channel time relocating module for comparing a second super-rate of a second CTA previously located in the superframe with a first super-rate of first CTA to be newly added and relocating the first CTA.

14. The apparatus as claimed in claim 13, wherein when the size of the isochronous CTA of the another device is greater than the allowable size of the maximum CTA in the frame of the upper layer of the device, the channel time dividing module is configured to divide and relocate the isochronous CTA by a value obtained by adding 1 (one) to a quotient of the isochronous CTA divided by the allowable size of the maximum CTA in the frame of the upper layer of the device.

15. The apparatus as claimed in claim 13, wherein after the second super-rate of the second CTA previously located in the superframe is compared with the first super-rate of the first CTA to be newly added, the channel time relocating module is configured to relocate one of the first CTA and second CTA with a higher super-rate ahead of another of the first CTA and second CTA with a lower super-rate.

16. The apparatus as claimed in claim 13, wherein a beacon for indicating a start of the superframe to be generated within a beacon period is generated in a non-periodic save area of the frame.

17. The apparatus as claimed in claim 13, wherein a third CTA not allocated to the device due to the isochronous CTA of the other device, is recognized to be virtually occupied in the frame, and transactions of the device are not generated from the third CTA.

18. The apparatus as claimed in claim 13, wherein a variety of types of CTA are uniformly distributed in the superframe.

19. A method for allocating channel time to an application on a wireless personal area network (PAN), comprising:
adjusting a first duration of a superframe to be substantially equivalent to a multiple of a second duration of a frame to output an adjusted superframe; comparing a size of a maximum channel time allocation (CTA) in a frame of an upper layer with a size of an isochronous CTA of a requesting device to efficiently locate the isochronous CTA in the adjusted superframe; and
if it is determined that the size of the isochronous CTA of the requesting device is greater than an allowable size of the maximum CTA in the frame of the upper layer, dividing the isochronous CTA by a value obtained by adding 1 to a quotient of the size of the isochronous CTA divided by the size of the maximum CTA.

20. The method as claimed in claim 19, further comprising:
comparing a second super-rate of existing CTA previously located in the superframe with a first super-rate of first CTA to be newly added; and
locating the first CTA ahead of the existing CTA when it is determined that the first super-rate of the first CTA is greater than the second super-rate of the existing CTA, or appending the first CTA to the existing CTA when the first super-rate of the first CTA is less than the second super-rate of the existing CTA.

21. The method as claimed in claim 19, further comprising, between the adjusting the first duration of the superframe and the comparing the size of the maximum CTA:
comparing a size of total available isochronous CTA with a size of a requested CTA requested by the device when the requested CTA is isochronous; and
sending a response to the requesting device and terminating channel allocation when it is determined that the requested CTA is greater than the total available isochronous CTA, or comparing the size of the maximum CTA when the requested CTA is less than the total available isochronous CTA.

22. The method as claimed in claim 19, further comprising, between the adjusting the first duration of the superframe and the comparing the size of the maximum CTA:
determining, when a requested CTA requested by a device is asynchronous, whether available CTA exists in the adjusted superframe and then allocating the available CTA, as an allocated CTA, if the available CTA exists; decreasing the requested CTA by a value of the allocated CTA; and
repeating the determining and the decreasing when the requested CTA remains, or sending a response to the requesting device when the requested CTA does not remain.

23. The method as claimed in claim 19, further comprising, between the adjusting the first duration of the superframe and the comparing the size of the maximum CTA:
when a CTA requested by a device is asynchronous, determining whether an available CTA exists in the adjusted superframe and then waiting for a next superframe if the available CTA does not exist.

24. The apparatus as claimed in claim 13 further comprising a beacon generating module for generating the superframe within a beacon period.

25. The apparatus as claimed in claim 13, wherein the multiple is an integer multiple.

26. The method as claimed in claim 19, wherein the multiple is an integer multiple.

27. A method for allocating channel time to an application on a wireless personal area network (PAN) wherein an upper layer has frames and a lower layer has superframes existing at a media access control (MAC) layer, the method comprising:
adjusting a first duration of a superframe to be substantially equivalent to an integral multiple of a second duration of a frame; and outputting an adjusted superframe.

28. A method for allocating channel time to an application on a wireless personal area network (PAN) wherein an upper layer has frames and a lower layer has superframes existing at a media access control (MAC) layer, the method comprising:
comparing a size of a maximum channel time allocation (CTA) in a frame of the upper layer with a size of an isochronous CTA of a requesting device; and dividing the isochronous CTA by a value obtained by adding 1 to a quotient of the size of the isochronous CTA divided by the size of the maximum CTA, if it is determined that the size of the isochronous CTA of the requesting device is greater than the maximum CTA in the frame of the upper layer.
